# EUROPEAN PATENT APPLICATION

(11) **EP 4 730 509 A1**
(43) Date of publication of application: **22.04.2026**
(21) Application number: 25206532.1
(22) Date of filing: 02.10.2025
(51) Int. Cl.: H01M 50/207, H01M 50/244, H01M 50/271, B29C 65/16

(54) **BATTERY CASING, BATTERY PACK, AND METHOD OF MANUFACTURING BATTERY PACKS**

(30) Priority: 14.10.2024 KR 20240139889
(71) Applicant: SAMSUNG SDI CO., LTD., Yongin-si, Gyeonggi-do 17084 (KR)
(72) Inventor: PARK, Sanghun, 17084 Yongin-si (KR)
(74) Representative: Marks & Clerk LLP

(57) **Abstract**

Disclosed herein are a battery casing, a battery pack, and a method of manufacturing battery packs. The battery casing is configured to house a plurality of battery cells, and includes a first casing, and a second casing coupled to the first casing at a bonding area by laser bonding. The first casing has a convex semicircular cross-sectional shape in the bonding area.

## Description

### BACKGROUND

### 1. Technical Field

The present disclosure relates to a battery casing, a battery pack, and a method of manufacturing battery packs, and more particularly, to a battery casing in which a bonding area is uniformly and stably formed between a first casing and a second casing, a battery pack, and a method of manufacturing battery packs.

### 2. Related Art

Unlike primary batteries that are not designed to be recharged, secondary batteries can be discharged and recharged. Low-capacity secondary batteries are used in small portable electronic devices, such as smart phones, feature phones, notebook computers, digital cameras, and camcorders. Large-capacity secondary batteries are widely used as power sources for driving motors, such as of hybrid vehicles or electric vehicles, and for power storage. A secondary battery includes an electrode assembly comprising a positive electrode and a negative electrode, a case that accommodates the electrode assembly, and a terminal part connected to the electrode assembly.

For a battery pack including multiple secondary batteries, a plurality of battery cells are housed in a casing made of a plastic-based material for protection from external shocks and environmental factors. A large-area casing includes two upper and lower cases bonded at a bonding surface therebetween by heat generated using a laser to thereby seal the casing. However, a difference in height may occur between the start and end of the bonding area if the bonding length is long. Also the material of the casing may be deformed when the temperature nears the material's melting point.

The information disclosed in this section is for enhancement of understanding of the background of the present disclosure and it may contain information that does not constitute related or prior art.

### SUMMARY

An object of the present disclosure is to provide a battery casing in which a bonding surface is uniformly and stably formed between a first casing and a second casing that are combined by laser bonding, a battery pack, and a method of manufacturing battery packs.

However, the technical problems to be solved by the present disclosure is not limited to the above-described problems, and other problems not mentioned herein, and aspects and features of the present disclosure that would address such problems, will be clearly understood by those skilled in the art from the description of the present disclosure below.

In accordance with an aspect of the present disclosure, there is provided a battery casing that is configured to house a plurality of battery cells and includes a first casing, and a second casing coupled to the first casing at a bonding area by laser bonding, wherein the first casing has a convex semicircular cross-sectional shape in the bonding area. The bonding area may be referred to as a bonding surface between the first casing and the second casing.

The second casing has a concave semicircular cross-sectional shape corresponding to the convex semicircular cross-sectional shape of the first casing in the bonding area.

The first casing may be made of a material through which laser light can be transmitted.

The second casing may include a receiving groove adjacent to the bonding area.

A thermosetting resin including an optical initiator may be provided in the bonding area.

An ultraviolet blocking paint may be provided on an upper outer surface of the first casing above the bonding area.

The ultraviolet blocking paint may have a predetermined color.

In accordance with another aspect of the present disclosure, there is provided a battery pack that includes a plurality of battery cells, and a battery casing configured to house the plurality of battery cells, wherein the battery casing includes a first casing, and a second casing coupled to the first casing at a bonding area by laser bonding, and the first casing has a convex semicircular cross-sectional shape in the bonding area.

The second casing may have a concave semicircular cross-sectional shape corresponding to the convex semicircular cross-sectional shape of the first casing in the bonding area.

The first casing may be made of a material through which laser light can be transmitted.

The second casing may include a receiving groove formed adjacent to the bonding area.

A thermosetting resin including an optical initiator may be provided in the bonding area.

An ultraviolet blocking paint may be provided on an upper outer surface of the first casing above the bonding area.

The ultraviolet blocking paint may have a predetermined color.

In accordance with a further aspect of the present disclosure, there is provided a method of manufacturing battery packs, which includes manufacturing a first casing, manufacturing a second casing, housing a plurality of battery cells in the second casing, coupling the first casing and the second casing at a bonding area by laser bonding, wherein the first casing has a convex semicircular cross-sectional shape in the bonding area.

The second casing may have a concave semicircular cross-section shape that corresponds to the convex semicircular cross-sectional shape of the first casing in the bonding area.

The first casing may be made of a material through which laser light can be transmitted.

A receiving groove may be provided in the second casing adjacent to the bonding area.

A thermosetting resin including an optical initiator may be provided in the bonding area - it may be applied to the second casing at the bonding surface between the first casing and the second casing.

The method may further include applying an ultraviolet blocking paint to an upper outer surface of the first casing above the bonding area. The ultraviolet blocking paint may have a predetermined color.

At least some of the above and other features of the invention are set out in the claims.

However, aspects and features of the present disclosure are not limited to those described above, and other aspects and features not mentioned will be clearly understood by a person skilled in the art from the detailed description below.

### BRIEF DESCRIPTION OF THE DRAWINGS

The accompanying drawings illustrate preferred embodiments of the present disclosure and serve to further describe aspects and features of the present disclosure together with the detailed description of the present disclosure. The present disclosure should not be construed as being limited to the drawings.
FIG. 1 is a schematic view of a cylindrical lithium secondary battery according to an embodiment;
FIG. 2 is a schematic view of a prismatic lithium secondary battery according to an embodiment;
FIGS. 3 and 4 are schematic views of a pouch-type lithium secondary battery according to an embodiment;
FIGS. 5A to 5C are views of a conventional battery casing;
FIGS. 6A to 6C are cross-sectional views of a bonding surface of a battery casing according to a first embodiment of the present disclosure;
FIGS. 7A and 7B are cross-sectional views of a bonding surface of a battery casing according to a second embodiment of the present disclosure;
FIG. 8 is a cross-sectional view of a bonding surface of a battery casing according to a third embodiment of the present disclosure; and
FIG. 9 is a flowchart of a method of manufacturing battery packs according to an embodiment of the present disclosure.

### DETAILED DESCRIPTION

Embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the scope of the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings are not drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

Secondary batteries can be a coin type, a cylindrical type, a prismatic type, and a pouch type. Before descriptions of embodiments of the present disclosure, cylindrical, pouch type, and prismatic secondary batteries are described because the present disclosure may be applied to these types of secondary batteries.

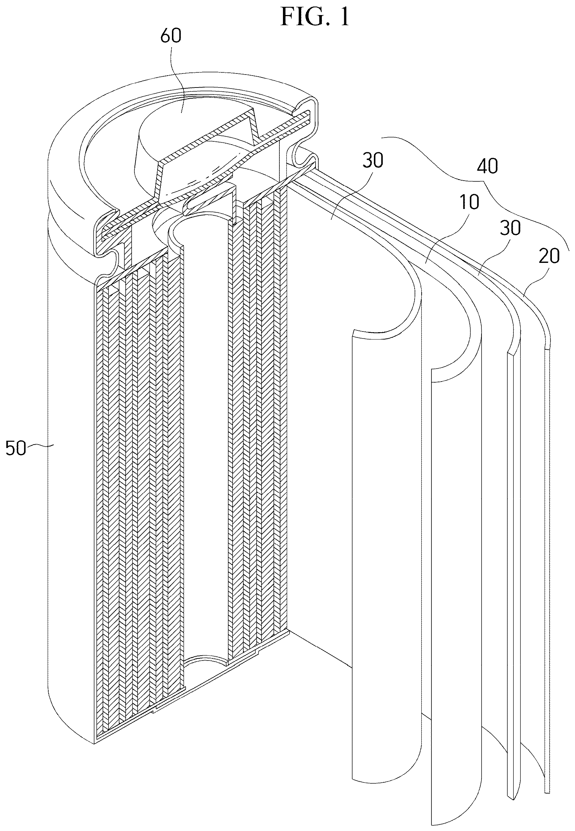

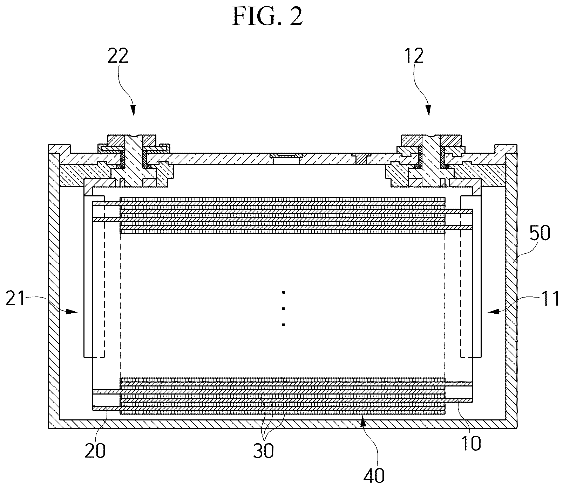

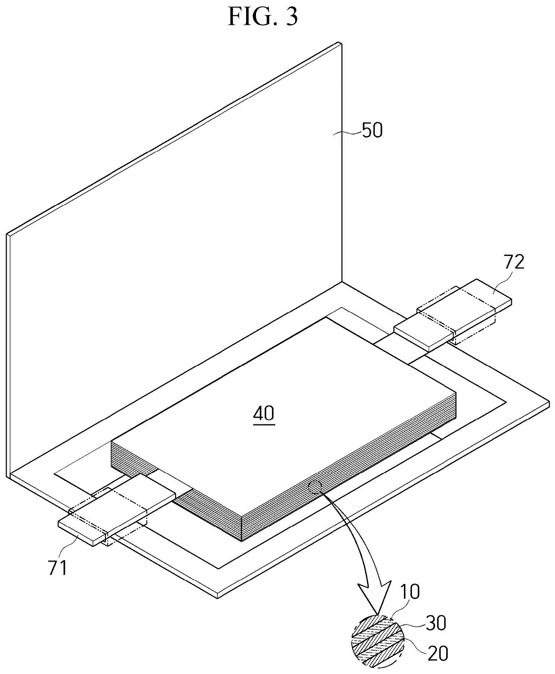

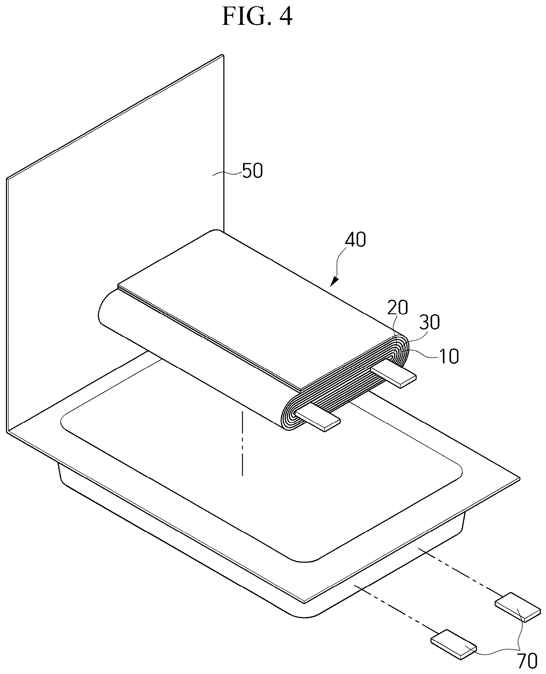

FIGS. 1 to 4 are schematic diagrams of lithium secondary batteries according to examples of the present disclosure. FIG. 1 illustrates a cylindrical lithium secondary battery. FIG. 2 illustrates a prismatic type secondary battery. FIGS. 3 and 4 illustrate a pouch type secondary battery. Referring to FIG. 1 to 4, a lithium secondary battery 1 may include an electrode assembly 40 in which a separator 30 is interposed between a first electrode plate 10 and a second electrode plate 20. The electrode assembly 40 is accommodated in a case 50. The first electrode plate 10, the second electrode plate 20, and the separator 30 may be impregnated with an electrolyte (not illustrated). As illustrated in FIG. 1, the lithium secondary battery 1 may include a sealing member 60 that seals the case 50. In FIG. 2, the lithium secondary battery 1 includes a first electrode lead tab 11, a first electrode terminal 12, a second electrode lead tab 21, and a second electrode terminal 22. As illustrated in FIGS. 3 and 4, the lithium secondary battery 1 includes an electrode tab 70 that provides an electrical passage for inducing a current formed in the electrode assembly 40 to outside of the electrode assembly 40, that is, a first electrode tab 71 and a second electrode tab 72 in the embodiment of Figure 3.

The electrode assembly 40 may be formed by winding or stacking the first electrode plate 10, the second electrode plate 20, and the separator 30, each of which is formed in a plate or film shape. For a winding stack, the winding axis of the electrode assembly 40 may be parallel to the length direction of the case. In other examples, the electrode assembly 40 may be the stack type, but the shape of the electrode assembly 40 is not limited in the present disclosure. The first electrode plate 10 of the electrode assembly 40 may function as a positive electrode, and the second electrode plate 20 functions as a negative electrode, or vice versa.

The first electrode plate 10 may be formed by applying a first electrode active material, such as graphite or carbon, to a first electrode collector plate formed of metal foil, such as copper, a copper alloy, nickel, or a nickel alloy. The first electrode plate 10 may include a first electrode tab (or a first uncoated part), which is an area where no first electrode active material is provided.

The second electrode plate 20 may be formed by applying a second electrode active material, such as transition metal oxide, to a material formed of metal foil, such as aluminum or an aluminum alloy. The second electrode plate 20 may include a second electrode tab (or a second uncoated part), which is an area where the second electrode active material is not provided.

The separator 30 may function to prevent a short-circuit between the first electrode plate 10 and the second electrode plate 20 while permitting a movement of lithium ions between the plates 10 and 20. The separator 30 may be, for example, a polyethylene film, a polypropylene film, or a polyethylene-polypropylene film.

The secondary batteries described may be provided in a plurality of secondary batteries to constitute a plurality of battery cells, which may be housed in a battery casing to constitute a battery pack.

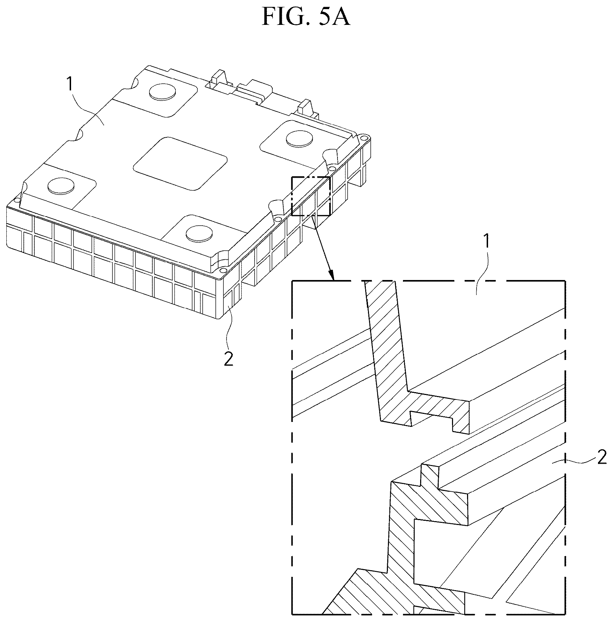

FIGS. 5A to 5C are views of a conventional battery casing.

Referring to FIGS. 5A to 5C, the battery casing may include a first casing 1 and a second casing 2 as illustrated in FIG. 5A. For joining the battery casing, a groove is formed on the first casing 1 and a protrusion is formed on the second casing 2 in a bonding area. While the first casing 1 is positioned on the second casing 2, the first casing 1 and the second casing 2 are bonded at the bonding area by heat generated from a laser.

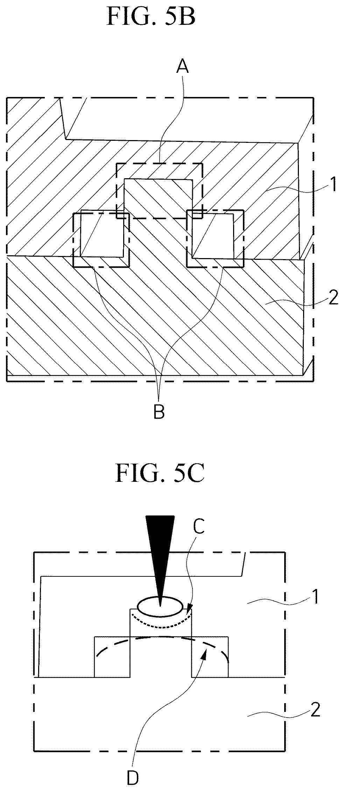

The process of forming the bonding area between the first casing 1 and the second casing 2 will be described in detail. As illustrated in FIG. 5B, the first casing 1 and the second casing 2 are bonded by melting the upper portion A of the protrusion formed on the second casing 2 using a laser. The melted base material is received in reception portions B located on the left and right sides of the groove formed on the first casing 1.

As illustrated in FIG. 5C, when the laser is irradiated from above the first casing 1, heat is distributed on the bonding surface between the first casing 1 and the second casing 2 as indicated by "C" so that the molten base material moves to the reception portions as indicated by "D" to form the joint between the first casing 1 and the second casing 2. If the first casing 1 and the second casing 2 are made of plastic of the same material series, such as polycarbonate (PC), the material may be deformed around a thermal melting point at the incidence of the laser. Such deformation of material may affect the strength or sealing force of the joint between the first casing 1 and the second casing 2.

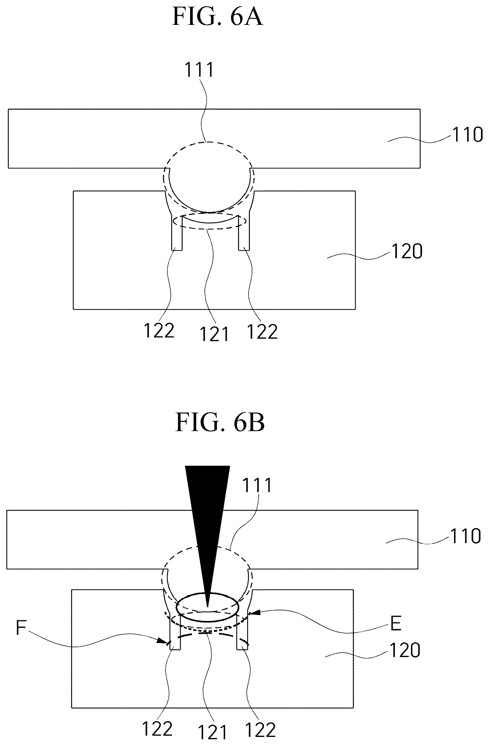

FIGS. 6A to 6C are cross-sectional views illustrating a bonding area of a battery casing according to a first embodiment of the present disclosure.

Referring to FIGS. 6A to 6C, the battery casing according to the first embodiment of the present disclosure may include a first casing 110, and a second casing 120 that is coupled to the first casing 110 at the bonding area by laser bonding. Since the first casing 110 and the second casing 120 have the same configuration as the conventional first casing and second casing described above except for the joint between the casings 110 and 120, a detailed illustration and description of the casings 110 and 120 will be omitted.

The first casing 110 may have a convex semicircular cross-section 111 at the bonding area between the first casing 110 and the second casing 120. In addition, the second casing 120 may have a concave semicircular cross-section 121, which corresponds to the convex semicircular cross-section of the first casing 110, at the bonding area between the first casing 110 and the second casing 120. Here, the first casing 110 may be made of a material capable, with the laser, by using the laser to generate the heat, for bonding the casings 110 and 120. For example, the first casing 110 may be made of polycarbonate (PC). As the first casing 110 is of a convex semicircular shape in cross-section, and the second casing 120 is of a corresponding concave semicircular shape in cross-section, as illustrated in FIG. 6B, the bonding area between the first casing 110 and the second casing 120 corresponds to the shape of the heat distribution E generated from the laser. Thus, the battery casing 100 according to embodiments of the present disclosure may be configured to evenly spread the heat of the laser onto the bonding surfaces of the first casing 110 and the second casing 120, thereby uniformly and stably forming the bonding area between the first casing 110 and the second casing 120. In addition, it is possible to prevent deformation of casing material about a thermal melting point caused by the heat generated by the laser.

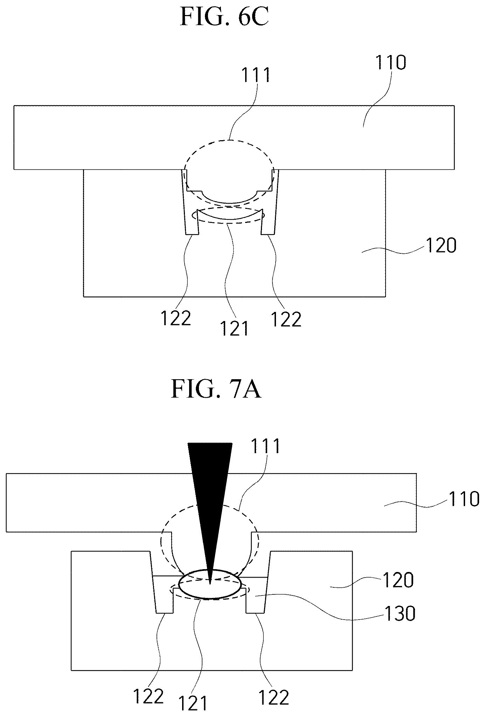

In an embodiment, the second casing 120 may have a receiving groove 122 formed adjacent to the bonding area between the first casing 110 and the second casing 120. The molten base material melted by the heat of laser is moved to and received in the receiving groove 122 as indicated by "F". Thus, a stable joint is formed between the first casing 110 and the second casing 120 as illustrated in FIG. 6C.

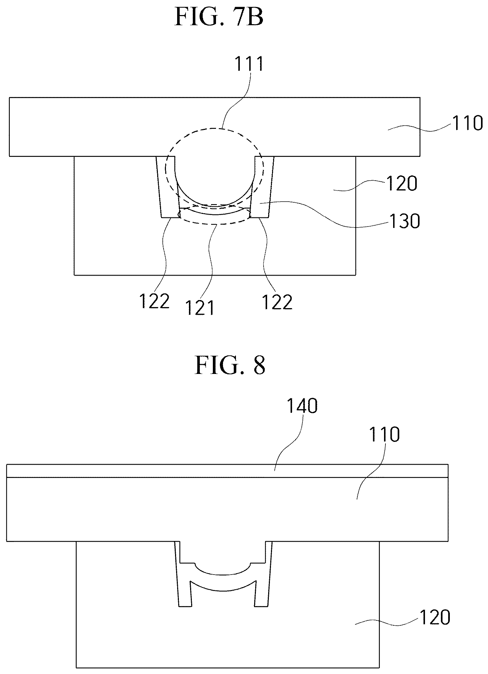

FIGS. 7A and 7B are cross-sectional views of a bonding area of a battery casing according to a second embodiment of the present disclosure.

Referring to FIG. 7A, the battery casing according to the second embodiment of the present disclosure, in addition to the configuration described above with reference to FIGS. 6A to 6C, may be configured to apply a thermosetting resin 130 including an optical initiator to the second casing 120 at the bonding area between the first casing 110 and the second casing 120. When laser is directed to the bonding area, the laser heats the bonding area between the first casing 110 and the second casing 120. At the same time, the optical initiator in the thermosetting resin 130 may be activated by the wavelength of the laser, thereby quickly forming a stable joint as illustrated in FIG. 7B.

FIG. 8 is a cross-sectional view of a bonding area of a battery casing according to a third embodiment of the present disclosure.

Referring to FIG. 8, the battery casing according to the third embodiment of the present disclosure, in addition to the configuration described above with reference to FIGS. 6A to 6C, may include an ultraviolet blocking paint 140 on the upper outer surface of the first casing 110 above the bonding area between the first casing 110 and the second casing 120. As such, it is possible to block particular wavelengths of an energy source that causes a reaction in the battery casing to suppress deformation of the battery casing. The ultraviolet blocking paint 140 may be capable, for example, of transmitting only visible light to the first casing 110 after the first casing 110 and the second casing 120 are bonded at the bonding area by means of laser.

In an embodiment, the ultraviolet blocking paint 140 may have a predetermined color. For example, the ultraviolet blocking paint 140 may have a color that provides good visibility therethrough. Thus, with the battery casing according to the embodiment of the present disclosure, it is easy to find a damaged area because paint cracking due to deformation of the battery casing 100 is visually determined through the ultraviolet blocking paint 140 applied to the upper outer surface of the first casing 110.

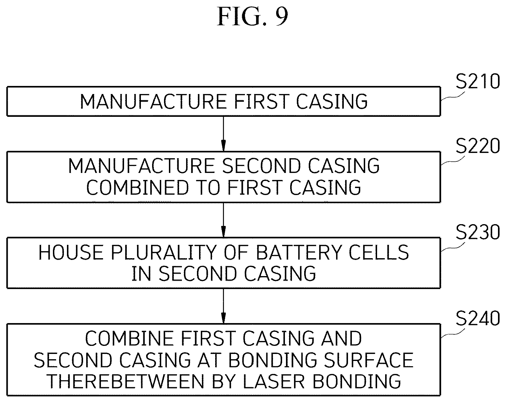

FIG. 9 is a flowchart of a method of manufacturing battery packs according to an embodiment of the present disclosure. The method of manufacturing battery packs according to the embodiment of the present disclosure may include steps S210 to S240.

In step S210, a first casing is manufactured. In embodiments, the first casing includes a convex semicircular shape in cross-section at the bonding area between the first casing and a second casing. The first casing may be made of a material through which a laser can be transmitted.

In step S220, the second casing is manufactured. It can be combined (i.e. joined) to the first casing. The second casing may include a concave semicircular shape in cross-section that corresponds to the convex semicircular cross-sectional shape of the first casing at the bonding area between the first casing and the second casing. In addition, step S220 may include a step of forming a receiving groove adjacent to the bonding area between the first casing and the second casing.

After step S220, the method of manufacturing battery packs may further include a step of applying a thermosetting resin including an optical initiator to the second casing in the bonding area between the first casing and the second casing.

In step S230, a plurality of battery cells are housed in the second casing.

In step S240, the first casing and the second casing are combined at the bonding area by laser bonding.

After step S240, the method may further include a step of applying an ultraviolet blocking paint to the upper outer surface of the first casing above the bonding area between the first casing and the second casing.

The method of manufacturing battery packs according to embodiments of the present disclosure has been described above with reference to the flowchart in FIG. 9. For the purposes of simplicity, the method has been illustrated and described as a series of blocks, but the present disclosure is not limited to the order of the blocks. In addition, some blocks may occur in a different order or concurrently with other blocks, and various different branches, flow paths, and sequences of blocks may be implemented that achieve the same or similar results. Furthermore, all of the blocks illustrated may not be required to implement the method.

In the description with reference to FIG. 9, each step may be further divided into additional steps or combined into fewer steps, depending on the implementation of the present disclosure. Additionally, if necessary, some steps may be omitted or the order between steps may be changed. Moreover, the contents of FIGS. 1 to 8 may be applied to the contents of FIG. 9. On the other hand, the contents of FIG. 9 may be applied to the contents of FIGS. 1 to 8.

Hereinafter, materials that may be used in a secondary battery according to embodiments of the present disclosure are described.

A compound (e.g., a lithiated intercalation compound) capable of reversible intercalation and deintercalation of lithium may be used as a positive electrode active material. Specifically, one or more of complex oxides of metal, selected among cobalt, manganese, nickel, and a combination of them, and lithium may be used as the positive electrode active material. The complex oxide may be lithium transition metal complex oxide. Examples of the complex oxide include lithium nickel-based oxide, lithium cobalt-based oxide, lithium manganese-based oxide, a lithium ferrous phosphate-based compound, cobalt-free nickel-manganese-based oxide, and combinations of these compounds. A compound that is represented as one of the following chemical formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0. 90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8). In these chemical formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L¹ may be Mn, Al, or a combination thereof.

A positive electrode for a lithium secondary battery may include a current collector and a positive electrode active material layer formed on the current collector. The positive electrode active material layer may include the positive electrode active material, and may further include a binder and/or a conductive material.

The amount of the positive electrode active material may be 90 wt.% to 99.5 wt.% with respect to 100 wt.% the positive electrode active material layer. The amount of the binder and the conductive material may be 0.5 wt.% to 5 wt.% with respect to 100 wt.% the positive electrode active material layer.

Aluminum may be used as the current collector. But the present disclosure is not limited thereto.

A negative electrode active material may include a material capable of reversibly intercalation/deintercalation of lithium ions, lithium metal, an alloy of lithium metal, a material capable of doping and dedoping with respect to lithium, or transition metal oxide.

The material capable of reversibly Intercalation/de-intercalation of lithium ions may include a carbon-based negative electrode active material, for example, crystalline carbon, amorphous carbon, or a combination thereof. An example of the crystalline carbon is graphite, such as natural graphite or synthetic graphite. Examples of the amorphous carbon include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination thereof.

The silicon-carbon composite may be a composite of silicon and amorphous carbon. According to an example, the silicon-carbon composite may include silicon particles, and may have a form in which amorphous carbon is coated on surfaces of silicon particles.

The silicon-carbon composite may further include crystalline carbon. For example, the silicon-carbon composite may include a core including crystalline carbon and silicon particles and an amorphous carbon coating layer disposed on a surface of the core.

A negative electrode for a lithium secondary battery may include a current collector and a negative electrode active material layer disposed on the current collector. The negative electrode active material layer may include the negative electrode active material, and may further include a binder and/or a conductive material.

For example the negative electrode active material layer may include 90 wt.% to 99 wt.% of the negative electrode active material, 0.5 wt.% to 5 wt.% of the binder , and 0 wt.% to 5 wt.% of the conductive material.

A nonaqueous-based binder, an aqueous-based binder, a dry binder, or a combination thereof may be used as the binder. If the aqueous-based binder is used as a binder for the negative electrode, the binder for the negative electrode may further include a cellulose-series compound capable of assigning viscosity.

One of nickel foil, stainless steel foil, titanium foil, nickel foam, copper foam, a polymer base on which a conductive metal has been coated, and a combination thereof may be used as a current collector for the negative electrode.

An electrolyte for a lithium secondary battery may include a nonaqueous organic solvent and lithium salts. The nonaqueous organic solvent may play a role as a medium through which ions that are involved in an electrochemical reaction of a battery can move. The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of these may be mixed and used as the nonaqueous organic solvent. If the carbonate-based solvent is used, annular carbonate and chain carbonate may be mixed and used.

A separator may be provided between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination thereof that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited to these examples.

The organic matter and the inorganic matter may have a form in which the organic matter and the inorganic matter are mixed in one coating layer. In other examples, a coating layer including the organic matter and a coating layer including the inorganic matter are stacked.

As is apparent from the above description, according to embodiments of the present disclosure, a first casing includes a convex semicircular shape in cross-section and the second casing may include a concave semicircular shape in cross-section at the bonding area between the first casing and the second casing. It is therefore possible to form a uniform and stable bonding area between the first casing and the second casing.

According to embodiments of the present disclosure, it is possible to ensure faster and more stable bonding through a chemical reaction of a thermosetting resin by applying the thermosetting resin including an optical initiator to the second casing at the bonding area between the first casing and the second casing.

According to embodiments of the present disclosure, it is possible to suppress a change in temperature after combination of the first casing and the second casing at the bonding area therebetween to ensure reliability of battery protection of the battery casing by applying ultraviolet blocking paint to the upper outer surface of the first casing above the bonding area between the first casing and the second casing.

Although the present disclosure has been described above in connection with the embodiments and drawings, the present disclosure is not limited to these embodiments. A person having ordinary knowledge in the art to which the present disclosure pertains may modify and change the present disclosure within the technical scope of the present disclosure.

## Claims

1. A battery casing configured to house a plurality of battery cells, the battery casing comprising:
a first casing; and
a second casing coupled to the first casing at a bonding area by laser bonding,
wherein the first casing has a convex semicircular cross-sectional shape in the bonding area.

2. The battery casing as claimed in claim 1, wherein the second casing has a concave semicircular cross-sectional shape corresponding to the convex semicircular cross-sectional shape of the first casing in the bonding area.

3. The battery casing as claimed in claim 2, wherein the second casing includes a receiving groove adjacent to the bonding area.

4. The battery casing as claimed in any one of the preceding claims, wherein the first casing is made of a material through which laser light can be transmitted.

5. The battery casing as claimed in any one of the preceding claims, wherein a thermosetting resin comprising an optical initiator is provided in the area.

6. The battery casing as claimed in any one of the preceding claims, wherein an ultraviolet blocking paint is provided on an upper outer surface of the first casing above the bonding area.

7. The battery casing as claimed in claim 6, wherein the ultraviolet blocking paint has a predetermined color.

8. A battery pack comprising:
a plurality of battery cells; and
a battery casing configured to house the plurality of battery cells,
wherein the battery casing is in accordance with any one of claims 1 to 7.

9. A method of manufacturing battery packs, comprising:
manufacturing a first casing;
manufacturing a second casing;
housing a plurality of battery cells in the second casing; and
coupling the first casing and the second casing at a bonding area by laser bonding,
wherein the first casing includes a convex semicircular cross-sectional shape in the bonding area.

10. The method as claimed in claim 19, wherein the second casing has a concave semicircular cross-sectional shape corresponding to the convex semicircular cross-sectional shape of the first casing in the bonding area.

11. The method as claimed in claim 10, wherein the first casing is made of a material through which laser light can be transmitted.

12. The method as claimed in claim 11, wherein the second casing includes a receiving groove adjacent to the bonding area.

13. The method as claimed in any one of claims 9 to 12, wherein a thermosetting resin comprising an optical initiator is provided in the bonding area.

14. The method as claimed in any one of claims 9 to 13, further comprising applying an ultraviolet blocking paint to an upper outer surface of the first casing above the bonding area.
